# EUROPEAN PATENT APPLICATION

(11) **EP 3 701 808 A1**
(43) Date of publication of application: **02.09.2020**
(21) Application number: 17929992.0
(22) Date of filing: 27.10.2017
(51) Int. Cl.: A23L 29/30, A23L 27/30

(54) **ALLULOSE SYRUP AND METHOD FOR MANUFACTURING SAME**

(71) Applicant: Samyang Corporation, Seoul 03129 (KR)
(72) Inventor: JOO, Kyung Ho, Seoul 06563 (KR); KIM, Kwang Soo, Seongnam-si Gyeonggi-do 13614 (KR)
(74) Representative: Wohlfahrt, Jan Günther
(86) International application number: PCT/KR2017/012018
(87) International publication number: WO 2019/083069

(57) **Abstract**

The present invention relates to an allulose syrup and method of preparing the same, and more specifically, an allulose syrup with proper viscosity ranges, including viscosity-regulating agent and a dispersant and method of preparing the same.

## Description

### [TECHNICAL FIELD]

The present invention relates to an allulose syrup and method of preparing the same, and more specifically, an allulose syrup with proper viscosity ranges, including viscosity-regulating agent and a dispersant and method of preparing the same.

### [BACKGROUND ART]

Sweeteners have been used as additives in foods and the like for a long time, and natural saccharides such as sugar (sucrose), fructose and glucose are widely used in beverage, food, pharmaceutical and oral hygiene/cosmetic industries due to their good tastes. In particular, sugar is widely used because it gives a desirable taste to consumers.

Sugar has excellent sweetness, and therefore it has been considered as the most preferable sweetener to enhance the taste of food and increase the taste by being added to various foods and processed foods, etc. from the past. However, recently, a problem has been raised as the harmfulness of sugar continues to be revealed.

As one of solutions to solve adult diseases, obesity, etc. which have become a problem in the world recently, various policies for reducing sugar consumption of their own nation in many countries including Korea have been implemented. Herein, unless otherwise stated, the term "saccharide reduction" means that the content of monosaccharides such as glucose, fructose, sucrose, etc. and disaccharides which are known to increase the risk of occurrence of obesity, diabetes, cardiovascular diseases, other various adult diseases when overdosed is lowered, and in this case, the "saccharide" does not include rare saccharides such as allulose and the like.

Specifically, as excessive intake of sugar is pointed out as a major cause of various lifestyle diseases such as obesity, diabetes as well as cavities, etc., the necessity of development of sweeteners which can replace it has been emerging all over the world. Recently, various sweetener materials have been developed.

Allulose is an epimer of carbon number 3 in fructose, and has sweetness equivalent to 70% of fructose and it is functional sugar which controls blood sugar, prevents cavities and inhibits lipogenesis in liver. Sugar alcohols, which are widely used as a substitute sweetener for sugar, have side effects such as causing diarrhea when consumed over a certain amount, but allulose have no known side effects. Therefore, the interest of allulose as a sweetener has been increased.

### [DISCLOSURE]

### [TECHNICAL PROBLEM]

An embodiment of the present invention is to provide a saccharide syrup composition having a specific viscosity range and having a high degree of dispersion of a viscosity modifier, comprising a raw saccharide syrup such as allulose syrup, a viscosity regulator and a dispersant.

Another embodiment of the present invention is to provide a method for preparing the saccharide syrup composition, a method for regulating the viscosity of the saccharide syrup composition using a viscosity regulator and a dispersant, and a method of improving dispersibility of viscosity regulator using a specific dispersant.

Further embodiment of the present invention relates to a food, food additive, beverage or beverage additive containing the saccharide syrup composition.

### [TECHNICAL SOLUTION]

An embodiment of the present invention is to provide a saccharide syrup composition having a specific viscosity range, and more specifically, comprising raw saccharide syrup, a viscosity regulator and a dispersant.

To adjust the viscosity of syrup, a viscosity regulator can be used, and preferably the viscosity regulator may be to increase the viscosity of saccharide syrup. The viscosity regulator has a low dispersibility and solubility in allulose syrup, and a dispersant for solving this may be additionally added to the saccharide syrup composition.

The viscosity of the saccharide syrup composition according to the present invention can be adjusted to an appropriate range, in consideration of the using method and convenience. Preferably, the viscosity measured at a temperature of 25 °C is 5 to 100 mPa · s, preferably 10 to 30 mPa · s, 15 to 25 mPa · s or 18 to 20 mPa · s.

The raw saccharide syrup composition being applicable to the present invention may comprise the allulose syrup including allulose or a saccharide syrup including oligosaccharides added to the allulose syrup. In an embodiment, when the raw saccharide syrup contains an allulose syrup and oligosaccharides, it contains raw content of 10 to 80 wt% of allulose and 20 to 90 wt% of oligosaccharides, based on 100 wt% of the solid content in the saccharide syrup. The raw saccharide syrup may include the solid content of 60 to 80 Brix.

The allulose syrup may comprise glucose, fructose and saccharides of disaccharides or more in addition to allulose. The allulose syrup may be prepared by various methods, and preferably, it may be prepared by a biological method, for example, microbial enzyme reaction.

For example, the allulose syrup may be allulose-containing mixed saccharide or be obtained therefrom, and the mixed saccharide may be mixed saccharide prepared by reacting one or more kinds selected from the group consisting of an allulose epimerase, a microbial cell of a strain producing the epimerase, a culture of the strain, a lysate of the strain, and an extract of the lysate or culture with a fructose-containing raw material, or be obtained therefrom. The mixed saccharide syrup may be mixed saccharide comprising allulose 2 to 55 parts by weight, fructose 30 to 80 parts by weight, glucose 2 to 60 parts by weight and oligosaccharide 0 to 15 parts by weight, and the raw allulose syrup may be obtained via separation and concentration processes from the mixed saccharide.

As one embodiment for preparation of allulose according to the present invention, an expression system capable of producing a psicose epimerase with high expression rate and stability, a GRAS (Generally recognized as safe) microorganism using the same, and a method for preparation of psicose comprising a microorganism and an enzyme using the expression system, etc. are specifically described in Korean Patent Nos. 10-1318422 and 10-1656063, etc.

The viscosity regulator according to the present invention is a component added for adjusting the viscosity of the syrup composition, and a specific example may be one or more selected from the group consisting of polysaccharide thickeners (hydrogels), for example pectin or carrageenan. Carrageenan has a higher increase of viscosity compared to pectin, so it can be added in a relatively small amount.

The amount of viscosity regulator in the present invention may be 0.01 to 5 wt%, for example 0.05 to 1 wt%, based on 100 wt% of the saccharide syrup composition.

The dispersant of the present invention is added to improve the low dispersibility and solubility of the viscosity regulator. The viscosity regulator such as pectin tends to have higher solubility and dispersibility as the temperature of the raw syrup increases, but when heating the syrup, undesirable changes such as decomposition and color change due to heating may be accompanied. In an embodiment of present invention, the use of a dispersant has an advantage of preventing or reducing undesirable changes in syrup caused by heating the syrup. Specific examples of the dispersant may be one or more selected from the group consisting of disaccharides, sugar alcohols, and oligosaccharides, preferably oligosaccharides. The dispersant is preferably added in powder form.

The sugar alcohols may be selected from the group consisting of sorbitol, maltitol, erythritol, xylitol, mannitol, isocitol and lactitol. The oligosaccharide may be at least one selected from the group consisting of galacto-oligosaccharides, malto-oligosaccharides, isomalto-oligosaccharides, fructooligosaccharides and soybean-oligosaccharides.

The content of the dispersing agent according to an embodiment of the present invention may be 10 to 3,000 parts by weight, for example, 50 to 2,000 parts by weight, or 100 to 1,000 parts by weight, based on 100 parts by weight of the viscosity regulator.

In one example of the present invention, the saccharide syrup composition may have a chromaticity of 100 to 500 IU. The numerical value range of the color value may be adjusted by the saccharide syrup itself, or may be adjusted by adding one or more kinds of chromaticity regulators selected from the group consisting of raw sugar extracts, caramel syrup and artificial dyes. The content of the chromaticity regulator to be added may be an appropriate content in consideration of chromaticity (IU) which each chromaticity regulator has, and for example, the content of the chromaticity regulator may comprise the content of 0.0001 to 1.0 wt% based on 100 wt% of the saccharide syrup composition.

In one example of the present invention, the saccharide syrup composition may further comprise one or more kinds of sweetener materials selected from the group consisting of sucralose, rebaudioside and stevia for regulation of sweetness. The content of the sweetener materials to be added may be comprised in an appropriate content in consideration of sweetness of each material compared to sugar, and for example, it may be comprised in a content of 0.00001 to 5.0 wt% based on 100 wt% of the saccharide syrup composition.

An embodiment of the present invention relates to a method for adjusting the viscosity of a saccharide syrup composition or a method for preparing a saccharide syrup composition having a specific viscosity range, which includes mixing the raw saccharide syrup with a viscosity regulator and a dispersant. The viscosity regulator and dispersant can be added to the raw saccharide syrup, after mixing the powders first to prepare a mixed powder.

In a specific embodiment, when the raw saccharide syrup is heated, it is more preferable to disperse the pectin as a viscosity regulator. For example, the method can include a step of raising the temperature to 40 to 90 ° C or 70 to 85 ° C.

In the heating step of the raw saccharide syrup, the indirect heating method using steam or hot water is preferable to minimize browning of raw saccharide syrup caused by heating the raw syrup, and the heating temperature range may be 40 to 90 ° C.

The step of preparing the mixed powder of the viscosity regulator and the dispersant is a process of mixing the powder with the viscosity regulator and the dispersant, and can be applied by any powder mixing process using a device such as a V-mixer or a zero gravity mixer.

The mixing of the mixed powder and the raw saccharide syrup may be performed by inputting the mixed powder of the viscosity modifier and the dispersant into once or several times, when the raw saccharide syrup reaches a target temperature. The process of inputting the mixed powder of the viscosity modifier and the dispersant into several times is efficient dispersion of the mixed powder of the thickener, and can be input at three or more times. The stirring speed in the addition of thickener can be 10 to 500 rpm.

Another embodiment of the present invention may be applied as a food, food additive, beverage, or beverage additive by formulating the saccharide syrup composition itself having a viscosity of 5 to 100 mPa · s at a temperature of 25 °C.

### [EFFECT OF THE INVENTION]

The saccharide syrup composition according to the present invention including a raw saccharide syrup, such as allulose syrup, regulator and a dispersant, has a specific viscosity range and high dispersion of the viscosity regulator, and can be applied to a variety of food, food additives, beverage or beverage additive.

### [MODE FOR INVENTION]

The present invention will be described in more detail with the following examples, but the following examples are provided as an exemplary meaning of the present invention only and are not intended to limit the scope of the present invention.

### Preparation Example 1: Preparation of allulose syrup

The allulose syrup used for the following examples was prepared according to the method disclosed in Korean Patent No. 10-1318422. From the raw material containing fructose in a content of 95 wt%, the allulose syrup consisting of 24∼26(w/w)% in which glucose:fructose:allulose:oligosaccharide = 6:67:25:2 of 70 Brix was obtained.

The obtained allulose syrup was treated by flowing through a column at a room temperature filled with cation exchange resin, anion exchange resin and resin in which cation and anion exchange resins were mixed, in order to remove impurities such as colored and ion components and the like. Then, using chromatography filled with calcium (Ca²⁺) type of ion exchange resin, a high purity of allulose fractions were obtained. The allulose fractions were ion purified and concentrated, thereby preparing the allulose syrup consisting of allulose 95 wt% and fructose 5 wt%, based on 100 wt% of the solid content of the saccharide syrup composition.

### Example 1: Test for the syrup viscosity

After heating the allulose syrup obtained in Preparation Example 1 to a temperature of 80 ° C, pectin or carrageenan was added and the properties of the syrup were observed while stirring at 60 rpm. Pectin was mixed and then left at room temperature to form layer. Then, the homogenization was carried out through re-stirring. The amounts of allulose syrup and carrageenan or pectin are shown in Table 1. In Tables 1 to 2, LM pectin (low methoxylated pectin) is a CPKelco product. Fructo-oligosaccharide syrup and isomalto-oligosaccharide syrup are Samyang's product.

**[Table 1]**

| Ingredients | Sample 1 | Sample 2 | Sample 3 | Sample 4 | Sample 5 |
|---|---|---|---|---|---|
| 95% Allulose syrup | 99.8 | 99.8 | 99.7 | 70 | 60 |
| carrageenan | 0.2 | 0 | 0 | 0 | 0 |
| LM pectin | 0 | 0.2 | 0.3 | 0 | 0 |
| Isomalto-oligosaccharide syrup | 0 | 0 | 0 | 30 | 0 |
| Fructo-oligosaccharide syrup | 0 | 0 | 0 | 0 | 40 |
| SUM | 100 | 100 | 100 | 100 | 100 |

**[Table 2]**

| Sample | Test samples |
|---|---|
| Comparative Example 1 | Allulose syrup including 95% of allulose obtained from Preparation Example 1 |
| Comparative Example 2 | A mixed saccharide syrup of allulose syrup including 95% of allulose obtained from Preparation Example 1 and oligosaccharide syrup |

The viscosity was measured for Samples 1 to 5 and Comparative Examples 1 and 2 of the syrup compositions containing different types of viscosity regulators. To measure the viscosity of the syrup, 50 mL of the sample was placed in a beaker and measured at a spindle rotation speed of 30 rpm using a viscometer (viscosity meter T-spindle D, Brookfield Engineering Laboratories Inc. USA) at 25 ° C.

**[Table 3]**

| Test Sample | Speed 30 (Unit:mPa • s) |
|---|---|
| Sample 1 | 46.8 |
| Sample 2 | 14.1 |
| Sample 3 | 18.1 |
| Sample 4 | 7.5 |
| Sample 5 | 10.0 |
| Comparative Example 1 | 3.5 |
| Comparative Example 2 | 98.0 |

As shown in Table 3, according to the results of Sample 1 containing carrageenan as a viscosity modifier, and Samples 2 and 3 containing pectin as a viscosity modifier, the thickening effect measured by viscosity showed that carrageenan has a higher effect than pectin. Sample 3 containing 0.3% of pectin had the viscosity of 18.1 mPa·s. Sample 4 containing isomalto-oligosaccharide as a viscosity modifier and Sample 5 containing fructo-oligosaccharide syrup are not preferred, although they are the syrup with high viscosity. Samples 2 and 3 using pectin and carrageenan as a viscosity modifier have excellent thickening effect, and thus pectin and carrageenan are preferred.

### Example 2: Sensory Evaluation for the syrup

In substantially the same manner as in Example 1, Samples 6 to 9 of the compositions prepared by using different composition and types of viscosity modifiers were prepared according to the composition of Table 4. In Sample 9, rebaudioside A was added together fructo-oligosaccharide syrup.

**[Table 4]**

| Ingredients | Sample 6 | Sample 7 | Sample 8 | Sample 9 |
|---|---|---|---|---|
| 95% Allulose syrup | 99.9 | 99.7 | 60 | 69.997 |
| carrageenan | 0.1 | 0 | 0 | 0 |
| LM pectin | 0 | 0.3 | 0 | 0 |
| Isomalto-oligosaccharide syrup | 0 | 0 | 40 | 0 |
| Fructo-oligosaccharide syrup | 0 | 0 | 0 | 30 |
| rebaudioside | 0 | 0 | 0 | 0.003 |
| SUM | 100 | 100 | 100 | 100 |

For Samples 6 to 9, in-house trained evaluation panels who were 20 females and 20 males with ages of 20s and 40s were subjected to sensory evaluation tests and scored 5-point scale according to the following evaluation criteria.

### <Evaluation criteria >

Sweetness intensity: The higher the value, the stronger the sweetness is felt
Sweetness preference: The higher the value, the higher preference of sweet taste that the panel feels subjectively.
Viscosity strength: The higher the value, the stronger the viscosity is felt
Viscosity preference: The higher the value, the higher preference of viscosity that the panel feels subjectively.

**[Table 5]**

| Test item | Sample 6 | Sample 7 | Sample 8 | Sample 9 |
|---|---|---|---|---|
| Sweetness intensity | 3.6 | 3.8 | 4 | 3.7 |
| Sweetness preference | 3.1 | 2.7 | 3.1 | 3.6 |
| Viscosity strength | 3.3 | 3.6 | 3.4 | 3.4 |
| Viscosity preference | 3.2 | 3.4 | 3.3 | 3.2 |
| Off-flavor/Off-taste/ bitter taste | YES | NO | NO | Bitter taste |

As shown in Table 5, Sample 6 containing carrageenan had an Off-flavor/Off-taste, and thus required additional treatment or additional ingredient for Off-flavor/Off-taste, in consideration of customer satisfaction. Thus, pectin is more preferable as a viscosity modifier. In addition, Sample 9 showed the bitterness, resulting in a low preference.

### Example 3: Test for the physiochemical property of syrup composition including pectin

### 3-1: Solubility of pectin solution on the time passage of pectin hydration

After heating 99.7 wt% of allulose syrup obtained in Preparation Example 1 to 80 °C, 0.3 wt% of pectin was added and the properties and shape were observed while stirring at 60 rpm. After pectin was mixed completely and was left at room temperature to form a layer. The homogenization was performed by re-stirring.

The viscosity of the prepared syrup was measured at a syrup temperature of 25 °C with a Brookfield viscometer (T-spindle D, speed 30). Table 6 shows the results of viscosity formation according to the hydration time of pectin that did not hydrate well.

**[Table 6]**

| Time(h) | Viscosity(unit: • s) | Appearance and the like |
|---|---|---|
| 0 | 10.7 | Lumpy, opaque |
| 16 | 11.4 | small chunks, Transparent |
| 24 | 12.6 | Transparent, high viscosity in upper part(layer formation) |
| 48 | 12.8 | Transparent, constant viscosity |
| 52 | 12.5 | Transparent, constant viscosity with the slighted decrease |

As shown in Table 6, the pectin was observed to hydrate over time, and was hydrated almost completely after approximately 48 hours.

### 3-2: Mixture of pectin and sucrose powder

In order to test the effect of the dispersing agent in the process of applying the viscosity regulator to allulose syrup, the dispersion effect of the samples was compared between the sample containing a viscosity regulator alone and the sample containing a mixture of pectin and sucrose as a dispersant.

Specifically, a syrup composition was prepared by adding 0.3 wt% of pectin and 0.3 wt% of sucrose to 99.4 wt% of the allulose syrup with the 95% allulose concentration of Preparation Example 1 (Sample 11). Pectin was added with stirring at low speed (30 rpm), at 85 °C and then the viscosity and dispersion were tested. As a Comparative example, Sample 10 was prepared by using 0.3 wt% of pectin, which was prepared in the same manner as the above syrup, except no sucrose.

The viscosity of the prepared syrup was measured at a syrup temperature of 25 ° C with a Brookfield viscometer (T-spindle D, speed 30).

**[Table 7]**

| Ingredient | Sample 10(wt%) | Sample 11(wt%) |
|---|---|---|
| 95% Allulose syrup | 99.7 | 99.4 |
| LM pectin | 0.3 | 0.3 |
| Sucrose | 0 | 0.3 |
| SUM | 100 | 100 |

In Sample 11 using sucrose and pectin together, the pectin was completely dispersed in 2 hours and observed to be transparent with naked eye, and the viscosity of the syrup was 22 mPa · s. In Sample 10 using only pectin with no sucrose, the pectin was not completely dispersed even after stirring for 5 hours, resulting in high turbidity and lumpiness. In addition, the viscosity of Sample 10 was 17 mPa · s, which was lower than that of Sample 11 using a mixture of sucrose and pectin. Therefore, it is preferable to apply a dispersant to the pectin input process for pectin dispersion. When pectin was applied as a viscosity modifier, the solubility and dispersibility were improved by heating.

### 3-3: Mixture of pectin and sucrose powder to various mixing ratios

An allulose syrup having 95% allulose concentration of Preparation Example 1, pectin and sucrose as a dispersant were used for preparing the syrup composition according to Table 8. Specifically, a syrup composition was prepared by adding pectin and sucrose to the allulose syrup and stirring at low speed (30 rpm) for 3 hours, after heating the allulose syrup to 80 °C. The viscosity of the prepared syrup was measured at a syrup temperature of 25 ° C with a Brookfield viscometer (T-spindle D, speed 30). The appearance of the prepared syrup was evaluated at the time 3 hours after the preparation of the syrup.

### <Evaluation criteria >

X: Lumps and bubbles of viscosity regulator are observed and are not dispersed visually (not dispersed)
Δ: Lumps of viscosity regulator are not observed, but particles of viscosity regulator are distinguished visually when they are diluted with distilled water (partially dispersed)
O: Lumps of viscosity regulator are not observed, and particles of viscosity regulator are not distinguished visually when they are diluted with distilled water (completely dispersed)

**[Table 8]**

| Allulose syrup (wt/wt%) | pectin (wt/wt%) | Dispersant (wt/wt%) | Weight ratio of dispersant to pectin | Appearance Evaluation | Viscosity (mPa • s) |
|---|---|---|---|---|---|
| 98.8 | 0.2 | 1.0 | 5 | ○ | 11.6 |
| 98.4 | 0.2 | 1.4 | 7 | ○ | 12.3 |
| 97.8 | 0.2 | 2.0 | 10 | ○ | 12.5 |
| 97.3 | 0.2 | 2.5 | 15 | ○ | 12.4 |
| 95.8 | 0.2 | 4.0 | 20 | ○ | 12.0 |

### 3-4: Mixture of pectin and fructo-oligosaccharide powder

An allulose syrup having 95% allulose concentration of Preparation Example 1 was used. Pectin as a viscosity regulator was set to 0.15% by weight based on 100% by weight of the syrup composition under the conditions of low-speed stirring (30RPM) and heating to 80 °C. In consideration that the set amount of pectin was 1, the syrup compositions of various compositions were prepared while changing the content of the fructo-oligosaccharide as a dispersant to 0.5, 1, 2, and 3 times as the weight of the viscosity regulator.

Specifically, the viscosity regulator and fructo-oligosaccharide content as indicated in Table 8 were mixed with allulose syrup at a remaining amount, to make a total amount of 100% by weight. The evaluation criteria were the same as in Example 3-3. The contents of ingredients in Table 9 are shown as % by weight.

**[Table 9]**

| Sample | Content of alluose syrup | Content of pectin | Content of fructo-oligosaccharide powder | Weight ratio of fructo-oligosaccharide t to pectin | Appearance evaluation after 3 hours |
|---|---|---|---|---|---|
| Sample 12 | 99.775 | 0.15 | 0.075 | 0.5 | ○ |
| Sample 13 | 99.7 | 0.15 | 0.15 | 1 | ○ |
| Sample 14 | 99.55 | 0.15 | 0.3 | 2 | ○ |
| Sample 15 | 99.4 | 0.15 | 0.45 | 3 | ○ |

As shown in the results of Table 9, it was confirmed that the higher the content of the dispersant to the viscosity regulator, the faster the hydration of the viscosity regulator proceeded. Accordingly, the viscosity formation time was also shortened.

### Example 4: Test for the physiochemical property of saccharide syrup

Fractoligosaccharide and isomaltoligosaccharide powder as a dispersant are used to evaluate whether the dispersibility and hydration property of pectin increase.

Specifically, the allulose syrup obtained in Preparation Example 1 was heated to a temperature of 80 ° C, and stirred at 30 RPM for 3 hours. When 0.2 wt% of pectin was fixed, the mixing ratios of dispersant were 0.5 to 20 times of the weight of pectin. The allulose syrup was mixed at a remaining amount excluding the content of pectin and dispersant to make 100% by weight. Fructooligosaccharide powder and isomaltooligosaccharide powder are the products of Samyang Corporation.

According to the same method as in Example 3-3, the appearance properties and viscosity of the prepared syrup composition were measured to show the hydration level. Specifically, the viscosity was measured by filling the prepared syrup in a 20 ml beaker with Brookfield viscometer (T spindle D, Speed 30), and the appearance properties were evaluated by the same method and criteria as in Example 3-3.

According to the criteria for evaluating the solubility of sample according to the present embodiment, the difference was observed with naked eye. The samples showing the evaluation criteria of ▲ which could not observed with naked eye were diluted with distilled water at 10 times and then observed with naked eye. To analyze the dispersion and hydration of the viscosity regulator with a dispersant, the appearance properties and the viscosity of the syrup were measured and the results are shown in Table 10. In Table 10, the component content is shown as percent by weight.

**[Table 10]**

| Content (w/w%) | | | | Appearance property | | Viscosity (mPa • s) | |
|---|---|---|---|---|---|---|---|
| Allulose syrup | pectin | dispersan t | Weight ratio of dispersant to pectin | Fructo-oligosacc haride | Isomalto-oligosacch aride | Fructo-oligosaccha ride | Isomalto-oligosacch aride |
| 99.7 | 0.2 | 0.1 | 0.5 | ○ | ▲ | 11.5 | 9.9 |
| 99.6 | 0.2 | 0.2 | 1 | ○ | ○ | 12.3 | 11.2 |
| 99.4 | 0.2 | 0.4 | 2 | ○ | ○ | 12.7 | 12.1 |
| 99.2 | 0.2 | 0.6 | 3 | ○ | ○ | 12.6 | 12.4 |
| 99 | 0.2 | 0.8 | 4 | ○ | ○ | 12.8 | 12.7 |
| 98.8 | 0.2 | 1.0 | 5 | ○ | ○ | 13.0 | 13.2 |
| 98.4 | 0.2 | 1.4 | 7 | ○ | ○ | 12.9 | 13.2 |
| 97.8 | 0.2 | 2.0 | 10 | ○ | ○ | 13.2 | 13.5 |
| 97.3 | 0.2 | 2.5 | 15 | ○ | ○ | 13.5 | 13.9 |
| 95.8 | 0.2 | 4.0 | 20 | ○ | ○ | 13.9 | 14.1 |

As shown in Table 10, as a result of using pectin as a viscosity regulator and fructo-oligosaccharides powder and isomalto-oligosaccharide powder as a dispersing agent at various contents and mixing ratios, the syrup composition with a predetermined viscosity was obtained by using various contents of dispersant and pectin.

In addition, when comparing the results of Example 3-3 using sucrose as a dispersant, it was confirmed that the hydration efficiency in mixture of pectin was higher, because the hygroscopicity of the oligosaccharide was higher than that of sucrose. When the weight ratio of pectin and oligosaccharide was 0.5, it was confirmed that the sample using fructo-oligosaccharide was superior in solubility to the sample using isomalto-oligosaccharide, suggesting that fructo-oligosaccharide was more preferable as a dispersant.

## Claims

1. A saccharide syrup composition comprising raw saccharide syrup including 10 to 99% by weight of allulose based on 100% by weight of the solid content of the raw saccharide syrup, a viscosity regulator and a dispersing agent, and having a viscosity of 5 to 100 mPa · s measured at a temperature of 25 ° C.

2. The saccharide syrup composition according to Claim 1, wherein the dispersant is at least one powder selected from the group consisting of disaccharides, sugar alcohols and oligosaccharides.

3. The saccharide syrup composition according to Claim 1, wherein the raw saccharide syrup comprises 10 to 80% by weight of allulose and 20 to 90% by weight of oligosaccharides based on 100% by weight of the solid content of the raw saccharide syrup.

4. The saccharide syrup composition according to Claim 1, wherein the viscosity regulator is contained in an amount of 0.01 to 5 % by weight based on 100% by weight of the syrup composition.

5. The saccharide syrup composition according to Claim 1, wherein the content of dispersant content is 10 to 3,000 parts by weight, based on 100 parts by weight of a viscosity regulator.

6. The saccharide syrup composition according to Claim 2, wherein the sugar alcohol is at least one selected from the group consisting of sorbitol, maltitol, erythritol, xylitol, mannitol, isocitol and lactitol.

7. The saccharide syrup composition according to Claim 2, wherein the oligosaccharide is at least one syrup composition selected from the group consisting of galacto-oligosaccharides, malto-oligosaccharides, isomalto-oligosaccharides, fructo-oligosaccharides and soy-oligosaccharides.

8. The saccharide syrup composition according to Claim 1, wherein the allulose syrup is an allulose-containing mixed saccharide or obtained therefrom, and wherein the mixed saccharide is prepared by reacting the fructose-containing raw material with a composition for producing allulose comprising at least one selected from the group consisting of an allulose epimerase, a cell of a microorganism producing the enzyme, a culture of the microorganism, a lysate of the microorganism, and an extract of the culture or the lysate.

9. The saccharide syrup composition according to Claim 8, wherein the allulose syrup is a syrup composition obtained by separation and concentration a mixed saccharide syrup comprising 2 to 55 parts by weight of allulose, 30 to 80 parts by weight of fructose, 2 to 60 parts by weight of glucose, and 0 to 15 parts by weight of oligosaccharides.

10. The saccharide syrup composition according to Claim 1, further comprising at least one sweetener selected from the group consisting of sucralose, rebaudioside and stevia.

11. The saccharide syrup composition according to Claim 1, wherein the saccharide syrup composition has chromaticity of 100 to 500 IU.

12. The saccharide syrup composition according to Claim 11, further comprising at least one color controlling agent selected from the group consisting of raw sugar extracts, caramel syrup and artificial coloring agent.

13. A method of preparing a saccharide syrup composition comprising raw saccharide syrup including 10 to 99% by weight of allulose based on 100% by weight of the solid content of the raw saccharide syrup, a viscosity regulator and a dispersing agent, and having a viscosity of 5 to 100 mPa · s measured at a temperature of 25 ° C.

14. The method according to Claim 13, wherein the method comprises preparing mixed powder of the viscosity regulator and the dispersing agent and adding the mixed powder to the raw saccharide syrup.
